# EUROPEAN PATENT APPLICATION

(11) **EP 4 579 456 A1**
(43) Date of publication of application: **02.07.2025**
(21) Application number: 23875134.1
(22) Date of filing: 22.09.2023
(51) Int. Cl.: G06F 9/50, G06F 9/48, G06F 9/448, G06F 3/14

(54) **ELECTRONIC DEVICE FOR CONTROLLING RELEASE OF PLURALITY OF PROCESSES AND METHOD THEREFOR**

(30) Priority: 06.10.2022 KR 20220128218; 31.10.2022 KR 20220143181
(71) Applicant: Samsung Electronics Co., Ltd., Suwon-si, Gyeonggi-do 16677 (KR)
(72) Inventor: LEE, Dongwook, Suwon-si Gyeonggi-do 16677 (KR); KWON, Jiman, Suwon-si Gyeonggi-do 16677 (KR); PARK, Jaehyeon, Suwon-si Gyeonggi-do 16677 (KR); BACK, Geonhee, Suwon-si Gyeonggi-do 16677 (KR); CHO, Daehyun, Suwon-si Gyeonggi-do 16677 (KR)
(74) Representative: Walaski, Jan Filip
(86) International application number: PCT/KR2023/014573
(87) International publication number: WO 2024/076068

(57) **Abstract**

According to one embodiment, an electronic device can identify a designated event for execution of a plurality of applications different from a first application on the basis of execution of the first application. The electronic device can form a plurality of areas in a memory on the basis of the identification of the designated event and execute a plurality of processes by using the plurality of areas. The electronic device can identify a parameter indicating a delay caused by the plurality of processes accessing the memory while at least one of the plurality of processes is being executed. The electronic device can adjust a threshold used to maintain a process in a second state that is different from a first state being executed by a processor in the memory on the basis of identifying a parameter that exceeds a specified parameter. The electronic device can release, on the basis of identifying that the processor switches to the second state among the plurality of processes, one area occupied by the process switched to the second state among the plurality of areas on the basis of the adjusted threshold.

## Description

### [Technical Field]

The following descriptions relate to an electronic device for controlling release of a plurality of processes and a method therefor.

### [Background Art]

An application may include a program used in a smart platform including a mobile, a smart TV, and/or Internet of things (IoT). When executing the application, the electronic device may execute a process associated with the application. The electronic device may store a resource necessary for execution of the process in memory. For example, a portion of the memory may be occupied for the execution of the process.

### [Disclosure]

### [Technical Solution]

According to an embodiment, an electronic device may comprise memory storing instructions, and a processor. The instructions, when executed by the processor, may cause the electronic device to identify, based on execution of a first application, a preset event to execute a plurality of applications different from the first application. The instructions, when executed by the processor, may cause the electronic device to execute, based on identifying the preset event, a plurality of processes. The instructions, when executed by the processor, may cause the electronic device to, while at least one of the plurality of processes is executed, identify a parameter indicating a delay caused by the plurality of processes accessing the memory. The instructions, when executed by the processor, may cause the electronic device to adjust, based on identifying the parameter exceeding a preset parameter, a threshold used to maintain a process in a second state different from a first state executed by the processor in the memory. The instructions, when executed by the processor, may cause the electronic device to release, based on identifying a process switched to the second state among the plurality of processes, an area occupied by the process switched to the second state among a plurality of areas occupied by execution of the plurality of processes, based on the adjusted threshold.

According to an embodiment, a method of an electronic device may comprise identifying, based on execution of a first application, a preset event to execute a plurality of applications different from the first application. The method of the electronic device may comprise executing, based on identifying the preset event, a plurality of processes. The method of the electronic device may comprise, while at least one of the plurality of processes is executed, identifying a parameter indicating a delay caused by the plurality of processes accessing the memory. The method of the electronic device may comprise adjusting, based on identifying the parameter exceeding a preset parameter, a threshold used to maintain a process in a second state different from a first state executed by a processor in the memory. The method of the electronic device may comprise releasing, based on identifying a process switched to the second state among the plurality of processes, an area occupied by the process switched to the second state among a plurality of areas occupied by execution of the plurality of processes, based on the adjusted threshold.

In a computer readable storage medium storing one or more programs, the one or more programs, when executed by a processor of an electronic device, may cause the processor of the electronic device to identify, based on execution of a first application, a preset event to execute a plurality of applications different from the first application. The one or more programs, when executed by the processor of the electronic device, may cause the processor of the electronic device to execute, based on identifying the preset event, a plurality of processes. The one or more programs, when executed by the processor of the electronic device, may cause the processor of the electronic device to, while at least one of the plurality of processes is executed, identify a parameter indicating a delay caused by the plurality of processes accessing the memory. The one or more programs, when executed by the processor of the electronic device, may cause the processor of the electronic device to adjust, based on identifying the parameter exceeding a preset parameter, a threshold used to maintain a process in a second state different from a first state executed by the processor in the memory. The one or more programs, when executed by the processor of the electronic device, may cause the processor of the electronic device to release, based on identifying a process switched to the second state among the plurality of processes, an area occupied by the process switched to the second state among a plurality of areas occupied by execution of the plurality of processes, based on the adjusted threshold.

### [Description of the Drawings]

FIG. 1 illustrates an example of a block diagram of an electronic device in a network environment according to an embodiment.
FIG. 2 illustrates an example of a block diagram of an electronic device according to an embodiment.
FIG. 3 illustrates an example of an electronic device identifying a preset event, according to an embodiment.
FIG. 4 illustrates an example of processes occupying areas in memory included in an electronic device, according to an embodiment.
FIG. 5 illustrates an example associated with a delay caused by processes, according to an embodiment.
FIG. 6 illustrates an example of a flowchart for an operation of an electronic device according to an embodiment.

### [Mode for Invention]

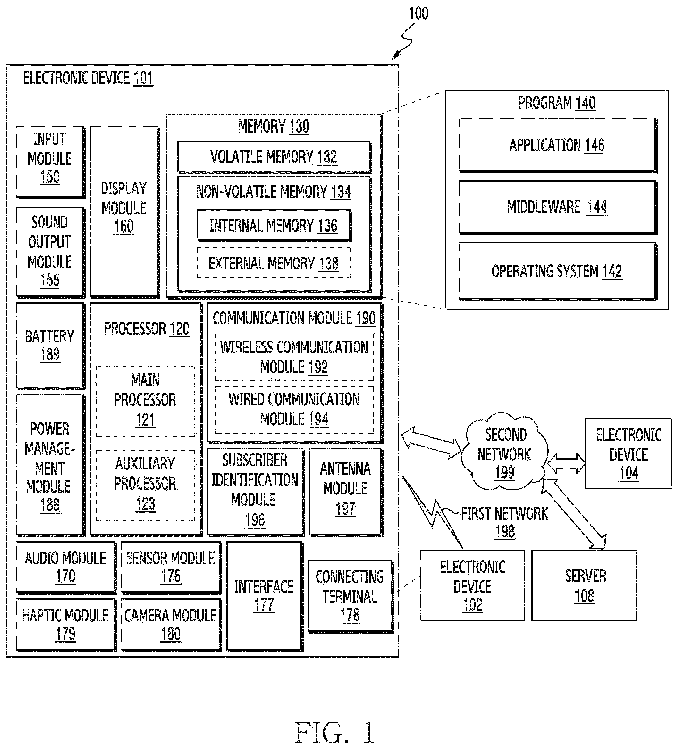

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

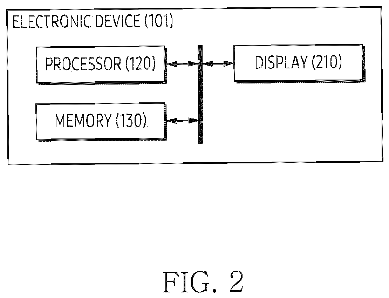

FIG. 2 illustrates an example of a block diagram for an electronic device according to an embodiment.

Referring to FIG. 2, according to an embodiment, the electronic device 101 may include at least one of a processor 120, memory 130, or a display 210. The processor 120, the memory 130, and the display 210 may be electronically and/or operably coupled with each other by an electronical component such as a communication bus 220. Hereinafter, hardware being operably coupled may mean that a direct connection or an indirect connection between hardware is established by wire or wirelessly so that second hardware is controlled by first hardware among the hardware. Although illustrated based on different blocks, an embodiment is not limited thereto, and a portion (e.g., at least a portion of the processor 120, the memory 130, and the display 210) of the hardware of FIG. 2 may be included in a single integrated circuit such as a system on a chip (SoC). A type and/or the number of hardware components included in the electronic device 101 is not limited as illustrated in FIG. 2. For example, the electronic device 101 may include only a portion of the hardware component illustrated in FIG. 2.

Referring to FIG. 2, the processor 120 of the electronic device 101 may include the hardware component for processing data based on one or more instructions. For example, the hardware component for processing the data may include an arithmetic and logic unit (ALU), a floating point unit (FPU), a field programmable gate array (FPGA), a central processing unit (CPU), and/or an application processor (AP). The number of the processor 120 may be one or more. For example, the processor 120 may have a structure of a multi-core processor such as a dual core, a quad core, a hexa core. The processor 120 of FIG. 2 may include the processor 120 of FIG. 1.

Referring to FIG. 2, according to an embodiment, the memory 130 of the electronic device 101 may include the hardware component for storing the data and/or the instruction inputted to or outputted from the processor 120. For example, the memory 130 may be referred to as a random-access memory (RAM). For example, volatile memory 132 may include at least one of dynamic RAM (DRAM), static RAM (SRAM), Cache RAM, and pseudo SRAM (SRAM). The memory 130 of FIG. 2 may include the memory 130 of FIG. 1.

Referring to FIG. 2, according to an embodiment, the display 210 of the electronic device 101 may output visualized information to a user. For example, the display 210 may be controlled by a controller such as the processor 120 and/or a graphic processing unit (GPU), and may output the visualized information to the user. The display 210 may include a flat panel display (FPD), and/or electronic paper. The FPD may include a liquid crystal display (LCD), a plasma display panel (PDP), and/or one or more light emitting diode (LED). The LED may include an organic LED (OLED). The display 210 of FIG. 2 may include the display module 160 of FIG. 1.

According to an embodiment, the display 210 of the electronic device 101 may include a sensor (e.g., a touch sensor panel (TSP)) for detecting an external object (e.g., a finger of the user) on the display 210. For example, based on the TSP, the electronic device 101 may detect an external object that is in contact with the display 210 or is floating on the display 210. In response to detecting the external object, the electronic device 101 may execute a function associated with a specific visual object corresponding to a position on the display 210 of the external object among the visual objects displayed in the display 210.

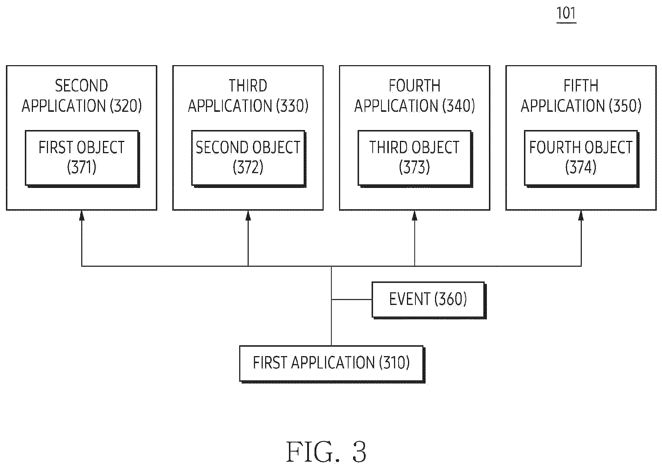

According to an embodiment, the electronic device 101 may execute a first application. The electronic device 101 may identify, based on execution of the first application, a preset event to execute a plurality of applications different from the first application. For example, the preset event may include an object to execute the plurality of applications. For example, the object may be associated with instructions included in the preset event. For example, the object may include a data structure with a preset name, such as a broadcast, and an instruction to execute at least one function based on the data structure. The electronic device 101 may execute a plurality of applications different from the first application receiving the preset event based on identifying the preset event. For example, the plurality of applications may be executed based on a second object different from the object, which is a first object. For example, the second object may include a second preset instruction different from the instruction, which is the first preset instruction, such as a broadcast receiver. The second preset instruction such as the broadcast receiver may include a data structure with a preset name, and an instruction to execute at least one function based on the data structure. The electronic device 101 may execute a plurality of processes included in each of the plurality of applications, based on execution of the plurality of applications. An operation of executing a process through an object, based on identifying occurrence of the preset event will be described later in FIG. 3.

According to an embodiment, the electronic device 101 may execute, based on the occurrence of the preset event, the plurality of processes. For example, the plurality of processes may be executed based on the execution of the plurality of applications. The electronic device 101 may allocate identifiers to the plurality of processes. For example, the identifiers may be referred to as out of memory score adj (OOM_SCORE_ADJ). The identifiers may be associated with states of the plurality of processes. For example, the states may include a state in which the process is executed in a foreground mode displayed through the display 210. For example, the states may include a state in which the process is executed in a background mode, which is a mode different from the foreground mode displayed through the display 210. For example, the states may include a state in which an area of the memory 130 is occupied in a state different from a state executed by the processor 120. For example, the state in which the area of the memory 130 is occupied in the state different from the state executed by the processor 120 may include a free state and/or an idle state. However, it is not limited thereto. The process in the state of occupying the area of the memory 130 in a second state different from a first state executed by the processor 120 may occupy a relatively small area compared to the process that occupies the area of the memory 130 in the state executed by the processor 120.

According to an embodiment, the electronic device 101, while at least one of the plurality of processes is executed, may identify a parameter indicating a delay caused by the plurality of processes accessing the memory. The parameter indicating the delay caused by the plurality of processes may be referred to as kernel pressure stall info (PSI). For example, as data required to execute an instruction fetched to the processor 120 does not exist (e.g., cache miss) in cache memory in the processor 120, the delay may occur while the data is fetched from the volatile memory (e.g., the volatile memory 132 of FIG. 1), and/or non-volatile memory (e.g., an external storage such as a secure digital card (SD) and/or flash memory). For example, in a state of controlling movement of data between the volatile memory and the non-volatile memory and/or movement of data in the non-volatile memory based on execution of a specific instruction, the delay may be occurred by the processor 120 not executing another instruction after the specific instruction until the movement of the data is completed.

For example, the delay may occur when it is impossible to transmit the data from the non-volatile memory to the memory 130 by the plurality of processes occupying the area of the memory 130, while the processor 120 receives the data from the non-volatile memory 130 different from the memory 130. For example, the delay may occur when it is impossible to transmit the data from the processor 120 to the area of the memory 130 occupied by the plurality of processes while the processor 120 transmits the data to the non-volatile memory. For example, the delay may occur when most of the area of the memory 130 is occupied by the plurality of processes. For example, the delay may occur based on the area of the memory 130 being occupied by the plurality of processes while the processor 120 accesses the area of the memory 130 from the cache memory. The delay is not limited by the above-described example.

For example, the parameter indicating the delay caused by the plurality of processes may associated with time when a core of the processor 120 is at least temporarily interrupted for preset duration (e.g., approximately 1 second, and/or approximately 10 seconds). The parameter may include a ratio between the duration in which the core of the processor 120 is at least temporarily interrupted, and the preset duration. However, it is not limited thereto.

According to an embodiment, the electronic device 101 may identify the parameter exceeding a preset parameter (e.g., PSI 20). The parameter may be referred to as the PSI. The electronic device 101 may adjust, based on identifying the parameter exceeding the preset parameter, a threshold used to maintain a process occupying a plurality of areas formed in the memory. The electronic device 101 may release, based on adjusting the threshold, among the plurality of processes, an area occupied by the process switched to a state different from a state executed by the processor 120.

According to an embodiment, the process may occupy the area in the memory 130 of the electronic device 101. The processor may occupy the area in the memory 130, based on the identifier allocated by the electronic device 101. For example, the electronic device 101 may allocate a first identifier to a first process. For example, the first identifier may be referred to as a cached app with activity (cch-act). The first process to which the first identifier is allocated may include a process associated with a screen to control the display 210 in a state executed by the processor 120. For example, the first identifier allocated to the first process may mean that the screen (e.g., an activity) to be displayed in the display 210 is generated by execution of the first process. The first process to which the first identifier is allocated may be directly and/or indirectly associated with control of the display 210. For example, the first process to which the first identifier is allocated may be displayed through the display 210, while an application associated with the first process is being executed. For example, the electronic device 101 may allocate the first identifier such as adj 900, adj 910, adj 920, adj 930, adj 940, adj 950, adj 960, adj 970, adj 980, adj 990, and/or adj 1000 to the first process.

For example, the electronic device 101 may allocate a second identifier to the second process. The second identifier may be referred to as a cached app as empty (cch-empty). For example, the second process to which the second identifier is allocated may include a process that was executed independently from a screen to control the display 210 in a state executed by the processor 120. For example, the second identifier allocated to the second process may mean that the screen to be displayed in the display 210 is not generated by execution of the second process. For example, the electronic device 101 may allocate the second identifier, such as adj 900, adj 905, adj 915, adj 925, adj 935, adj 945, adj 955, adj 965, adj 975, adj 985, and/or adj 995, to the second process. The first process to which the first identifier is allocated may occupy a relatively larger area in the memory 130 than the second process to which the second identifier is allocated.

For example, when a third process is being executed by the processor 120 in the foreground mode, the electronic device 101 may allocate a third identifier to the third process being executed. For example, the electronic device 101 may allocate adj 0 to the third process being executed. For example, the electronic device 101 may allocate adj 700 to adj 799 when a fourth process is being executed by the processor 120 in the background mode.

According to an embodiment, the electronic device 101 may release the second process to which the second identifier occupying the area of the memory 130 is allocated. For example, the electronic device 101 may identify the area of the memory 130 occupied by the first process to which the first identifier is allocated and the second process to which the second identifier is allocated. The electronic device 101 may release the area of the memory 130 occupied by the process to which the first identifier is allocated, based on identifying the area of the memory 130 occupied by the first process to which the first identifier is allocated and the second process to which the second identifier is allocated. The electronic device 101 may relatively preferentially release the area of the memory 130 occupied by the first process, compared to the area of the memory 130 occupied by the second process. For example, the electronic device 101 may preset the second process to which the second identifier is allocated to the first process to which the first identifier is allocated as a relatively high priority. The electronic device 101 may release the area in which the processes occupy the memory, based on the preset ranking. As described above, according to an embodiment, the electronic device 101 may release a first area among the first area of the memory 130 occupied by the first process to which the first identifier is allocated and a second area of the memory 130 occupied by the second process to which the second identifier is allocated. The electronic device 101 may secure the area in the memory 130, by releasing the first area of the memory 130 occupied by the first process to which the first identifier is allocated.

According to an embodiment, the electronic device 101 may adjust the number of identifiers. For example, the number of the identifiers may include the threshold used to maintain the process. For example, the threshold used to maintain the process may be associated with the number of processes occupying the area of memory 130.

According to an embodiment, the electronic device 101 may identify the second process to which the second identifier is allocated. The electronic device 101 may identify the number that the second process to which the second identifier is allocated is executed. The electronic device 101 may obtain a list including the second process to which the second identifier is allocated, based on identifying the number of execution of the second process to which the second identifier is allocated. For example, the electronic device 101 may generate the list including the second process to which the second identifier is allocated, based on identifying the number of execution of the second process to which the second identifier is allocated, which exceeds the preset number. For example, the list may be generated based on the preset event. For example, the electronic device 101 may generate the list, based on the occurrence of the allocated event. For example, the electronic device 101 may identify the number of execution of the second process to which the second identifier is allocated, based on the occurrence of the preset event. The electronic device 101 may generate the list, based on identifying the number of execution of the second process to which the second identifier is allocated, based on the occurrence of the preset event. For example, the list may include five processes including the second process. However, it is not limited thereto.

As described above, according to an embodiment, the electronic device 101 may identify the plurality of processes occupying areas in the memory 130. The processor 120 of the electronic device 101 may be delayed from accessing the plurality of areas in the memory 130 while the plurality of areas is occupied by the plurality of processes. The electronic device 101 may identify identifiers of the plurality of processes to release the plurality of processes from the areas formed in the memory 130. The electronic device 101 may preset an order of releasing the plurality of processes, based on the identifiers of the plurality of processes. The electronic device 101 may release the plurality of processes in the order, based on presetting the order to release the plurality of processes. For example, the electronic device 101 may release the occupied area of the first process to which the first identifier is allocated prior to the occupied area of the second process to which the second identifier is allocated. The electronic device 101 may release a relatively larger area of the memory 130, by releasing the plurality of processes according to the order. The electronic device 101 may increase calculation speed of the processor 120, by releasing the first process to which the first identifier is allocated.

FIG. 3 illustrates an example of an electronic device identifying a preset event, according to an embodiment. An electronic device 101 of FIG. 3 may be an example of the electronic device 101 of FIG. 1 and/or FIG. 2. Operations of FIG. 3 may be executed by the processor 120 of FIG. 1 and/or FIG. 2.

Referring to FIG. 3, according to an embodiment, the electronic device 101 may execute a first application 310. The electronic device 101 may identify a preset event 360 generated based on execution of the first application 310. The preset event 360 may be associated with a preset instruction such as a broadcast. The electronic device 101 may transmit a signal associated with the preset event 360 to applications 320, 330, 340, and 350 different from the first application 310, based on identifying the preset event 360. The electronic device 101 may identify an object (e.g., a broadcast receiver) associated with the preset event 360 in the applications 320, 330, 340, and 350, based on a signal associated with the preset event 360. Referring to FIG. 3, the second application 320 may include a first object 371. The third application 330 may include a second object 372. The fourth application 340 may include a third object 373. The fifth application 350 may include a fourth object 374. In an example of FIG. 3, the first object 371 and the third object 373 may be a object associated with the preset event 360. The first object 371 and/or the third object 373, which is the object associated with the preset event 360, may include the broadcast receiver. For example, the first object 371 may include an object for causing execution of the second application 320, based on occurrence of the preset event 360. For example, the third object 373 may include an object for causing execution of the fourth application 340, based on the occurrence of the preset event 360. The second object 372 and/or the fourth object 374 may not include the object (e.g., the broadcast receiver) executed by the occurrence of the preset event 360. The above-described example is an example and is not limited to the above description.

For example, the electronic device 101 may identify the preset event 360, based on executing the first application 310. The electronic device 101 may execute, based on identifying the preset event, the second application 320 and/or the fourth application 340. The electronic device 101 may execute the second application 320 and/or the fourth application 340, based on identifying the first object 371 and/or the third object 373 included in the second application 320 and/or the fourth application 340.

For example, the electronic device 101 may execute a plurality of processes, based on the execution of the second application 320 and/or the fourth application 340. The plurality of processes may be executed independently from a screen to control a display of the electronic device 101. The plurality of processes may be executed in association with the screen to control the display of the electronic device 101. According to an embodiment, the electronic device 101 may preset to occupy an area formed in memory (e.g., the memory 130 of FIG. 1) in a state of the process. In order to occupy the area, the electronic device 101 may allocate an identifier to each of the plurality of processes. A first state of the state of the process may include a state executed by the processor 120. A second state of the state of the process may include a state different from a state executed by the processor 120. For example, the second state may include a state that occupies the area of the memory in a state different from a state executed by the processor 120.

The electronic device 101 according to an embodiment may switch the process in the first state to a process in the second state. For example, based on termination of an application associated with the process in the first state, the process in the first state may be switched to the process in the second state. In an example of FIG. 3, the electronic device 101 may execute the plurality of processes in the first state while the second application 320 and/or the fourth application 340 is being executed. The electronic device 101 may switch the plurality of processes from the first state to the second state, based on the termination of the second application 320 and/or the fourth application 340.

According to an embodiment, the electronic device 101 may release the process in the second state occupying the area formed in the memory. For example, the electronic device 101 may execute a function such as a low memory killer demon (LMKD) to release the process in the second state. For example, the electronic device 101 may execute a function such as CPU scheduling to release the process in the second state. For example, the electronic device 101 may execute a function such as a kernel swap demon (kswapd) to release the process in the second state. However, it is not limited to the above-described example.

As described above, according to an embodiment, the electronic device 101 may identify the execution of the first application 310. The electronic device 101 may identify the occurrence of the preset event 360 based on the execution of the first application 310. The electronic device 101 may identify the first object 371 to the fourth object 374 included in the second application 320 to the fifth application 350, based on identifying the occurrence of the preset event 360. The electronic device 101 may identify whether the first object 371 to the fourth object 374 include an object for identifying the occurrence of the preset event 360. The electronic device 101 may execute the application including the object to identify the occurrence of the preset event 360, based on identifying inclusion of the object for identifying the occurrence of the preset event 360 in at least one of the first object 371 to fourth object 374. For example, in an example described in FIG. 3, the first object 371 may include the object for identifying the occurrence of the preset event 360. The third object 373 may include the object for identifying the occurrence of the preset event 360. The electronic device 101 may execute the second application 320 and/or the fourth application 340, based on the first object 371 and/or the third object 373. The electronic device 101 may execute the plurality of processes, based on the execution of the second application 320 and/or the fourth application 340. The electronic device 101 may execute the plurality of processes, based on the occurrence of the preset event 360. The electronic device 101 may enhance security of the electronic device 101 by executing the plurality of processes, based on the occurrence of the preset event 360.

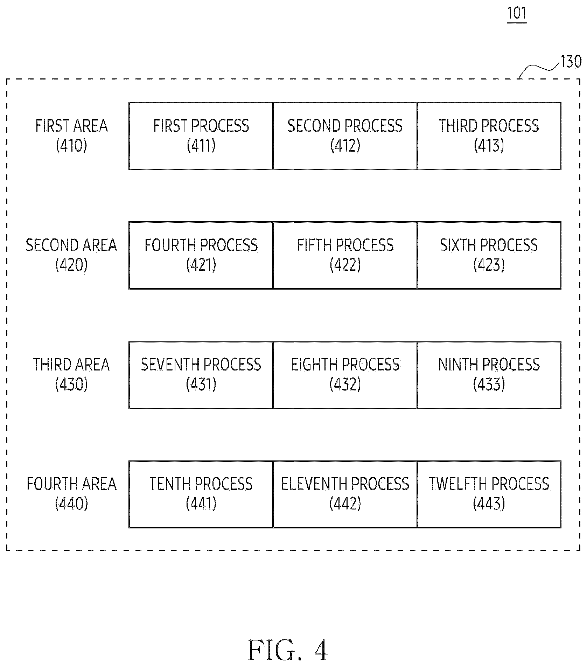

According to an embodiment, the electronic device 101 may sequentially release a plurality of processes in the second state. When releasing the plurality of processes in the second state, the electronic device 101 may release, by presetting a ranking. An operation of releasing by presetting the ranking will be described later in FIG. 4.

FIG. 4 illustrates an example of processes occupying areas in memory included in an electronic device, according to an embodiment. An electronic device 101 of FIG. 4 may be an example of the electronic device 101 of FIG. 1, FIG. 2, and/or FIG. 3. Operations of FIG. 4 may be executed by the processor 120 of FIG. 1 and/or FIG. 2.

Referring to FIG. 4, according to an embodiment, the electronic device 101 may identify a preset event (e.g., the preset event 360 of FIG. 3). The electronic device 101 may execute an application, based on identifying of the preset event. The electronic device 101 may execute a process associated with the application, based on execution of the application. For example, the electronic device 101 may execute a plurality of processes, based on identifying the preset event. Memory 130 of the electronic device 101 may be occupied, based on the execution of the plurality of processes. For example, a plurality of areas in the memory 130 may be occupied by the execution of the processes. The electronic device 101 may preset the process to occupy at least one of the plurality of areas 410 to 440. The electronic device 101 may allocate an identifier to the process and preset to occupy an area corresponding to the identifier among the plurality of areas. Based on the allocated identifier, the process may occupy an area of the memory 130. An example of FIG. 4 is an example associated with a process of a second state different from a first state executed by a processor, and is not limited to an example to be described later.

Referring to FIG. 4, according to an embodiment, the electronic device 101 may allocate a first identifier to at least a portion of a process among a process in the second state. The first identifier may be referred to as cch-act. The electronic device 101 may allocate a second identifier to at least a portion of the process among the process in the second state. The second identifier may be referred to as cch-empty. The electronic device 101 may allocate the first identifier to a fourth process 421, a fifth process 422, a sixth process 423, a tenth process 441, an eleventh process 442, and a twelfth process 443. The electronic device 101 may allocate the second identifier to a first process 411, a second process 412, a third process 413, a seventh process 431, an eighth process 432, and a ninth process 433. For example, the first identifier may be allocated to a process associated with a screen to control a display before switched to the second state. For example, the second identifier may be allocated to a process executed independently from the screen to control the display before switched to the second state. The independently executed operation may include an operation executed by a processor in a state of not being displayed in the screen through the display.

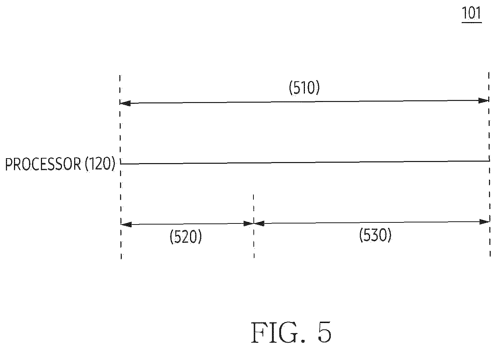

According to an embodiment, the electronic device 101 may identify a parameter indicating a delay caused by the plurality of processes accessing the memory 130 while at least one of a plurality of processes different from the processes 411, 412, 413, 421, 422, 423, 431, 432, 433, 441, 442, and 443 illustrated in FIG. 4 is being executed. The parameter indicating the delay caused by the plurality of processes may be referred to as PSI. A description associated with the parameter indicating the delay will be described later in FIG. 5. According to an embodiment, the electronic device 101 may identify the parameter exceeding a preset parameter. The preset parameter may be referred to as PSI20. The electronic device 101 may adjust, based on identifying the parameter exceeding the preset parameter, a threshold used to maintain the process in the second state executed by the processor in the memory 130.

For example, the electronic device 101 may increase the threshold used to maintain the process in the second state to which the second identifier is allocated. For example, the electronic device 101 may adjust the threshold used to maintain the process in the second state to which the second identifier is allocated, to 60, which is twice a number of 30. For example, the electronic device 101 may reduce the threshold used to maintain the process in the second state to which the first identifier is allocated. For example, the electronic device 101 may adjust the threshold used to maintain the process in the second state to which the first identifier is allocated to 4, which is 1/4 times a number of 16. However, it is not limited to the example described above. The threshold and multiple are exemplary and are not limited thereto. According to an embodiment, the electronic device 101 may release an area occupied by the process in the second state, based on adjusting the threshold used to maintain the process in the second state. For example, when releasing the process in the second state, the electronic device 101 may release, by presetting a ranking. For example, the electronic device 101 may release the area occupied by the processes 421, 422, 423, 441, 442, and 443 in the second state to which the first identifier is allocated in higher ranking than the area occupied by the processes 411, 412, 413, 431, 432, and 433 in the second state to which the second identifier is allocated. For example, the electronic device 101 may preset a second area 420 as a first priority. The electronic device 101 may preset a fourth area 440 as a second priority. The electronic device 101 may preset a first area 410 as a third priority. The electronic device 101 may preset a third area 430 as a fourth priority. When releasing the processes 411, 412, 413, 421, 422, 423, 431, 432, 433, 441, 442, and 443 occupying memory the areas 410, 420, 430, and 440, the electronic device 101 may release, based on the preset ranking. For example, the electronic device 101 may sequentially release the processes 411, 412, 413, 421, 422, 423, 431, 432, 433, 441, 442, and 443, based on the preset ranking.

According to an embodiment, the electronic device 101 may adjust the parameter indicating the delay of the processor to a first threshold used to maintain the process in the second state based on identifying the first parameter, which is the preset parameter. The first parameter may be referred to as the PSI 20. However, it is not limited to the above-described example. The electronic device 101 may adjust, based on identifying the second parameter different from the first parameter, the adjusted first threshold to a second threshold, which is the threshold before adjustment. For example, the second parameter may be referred to as PSI 10. For example, the second threshold may be 16, in case that it is a threshold used to maintain the second process to which the first identifier is allocated. For example, the second threshold may be 30, in case that it is a threshold used to maintain the second process to which the second identifier is allocated. However, it is not limited thereto.

According to an embodiment, the electronic device 101 may identify that preset duration was exceeded in a state of releasing processes, based on the adjusted threshold. The electronic device 101 may adjust the first threshold, which is the adjusted threshold, to the second threshold, based on identifying that the preset duration was exceeded. The preset duration may include approximately 1 minute.

According to an embodiment, the electronic device 101 may identify the number that the process in the second state is executed. For example, the electronic device 101 may identify the number that the process in the second state to which the second identifier is allocated is executed. The electronic device 101 may identify that the number that the process in the second state is executed exceeds the preset number. The electronic device 101 may obtain, based on identifying the number that the process in the second state exceeding the preset number was executed, a list including the process in the second state which was executed more than the preset number. The electronic device 101 may maintain the area of the memory occupied by the process in the second state, based on obtaining the list including the process in the second state.

As described above, according to an embodiment, the electronic device 101 may adjust the threshold used to maintain the process in the second state. The electronic device 101 may release the area of the memory 130 occupied by the process in the second state, based on adjusting the threshold used to maintain the process in the second state. When releasing the area occupied by the process in the second state, the electronic device 101 may release, by presetting the ranking. The electronic device 101 may reduce repetitive execution of the process by releasing and presetting the ranking. The electronic device 101 may increase calculation speed of the processor by releasing and presetting the ranking.

FIG. 5 illustrates an example associated with a delay caused by processes, according to an embodiment. An electronic device 101 of FIG. 5 may be an example of the electronic device 101 of FIG. 1, FIG. 2, FIG 3, and/or FIG. 4. A processor 120 of FIG. 5 may be an example of the processor 120 of FIG. 1 and/or FIG. 2. Operations of FIG. 5 may be executed by the processor 120 of FIG. 1, FIG. 2, and/or FIG. 5.

Referring to FIG. 5, according to an embodiment, the electronic device 101 may include the processor 120. When accessing memory (e.g., the memory 130 of FIG. 1 and/or FIG. 2), using the processor 120, the electronic device 101 may identify a parameter indicating a delay caused by a plurality of processes. For example, the parameter may be referred to as PSI. For example, the parameter may be associated with duration in which an operation of the processor 120 is at least temporarily interrupted during a preset duration (e.g., approximately 1 second, or approximately 10 seconds). For example, the delay may be caused by a plurality of processes occupying the memory 130 while the processor 120 accesses the memory 130.

For example, while the processor 120 receives data from non-volatile memory different from the memory 130, the delay may occur when it is impossible to transmit the data from the non-volatile memory to the memory 130 by the plurality of processes occupying an area of the memory 130. For example, while the processor 120 transmits the data to the non-volatile memory, the delay may occur when it is impossible to transmit the data from the processor 120 to the memory 130 by the plurality of processes occupying the area of the memory 130. For example, while the processor 120 accesses an area of the memory 130 from cache memory, the delay may occur based on that the plurality of processes occupies an area formed in the memory 130. For example, as the data required to execute an instruction fetched to the processor 120 does not exist (e.g., cache miss) in cache memory in the processor 120, the delay may occur while the data is fetched from volatile memory and/or the non-volatile memory. For example, in a state that the processor 120 control movement of data between the volatile memory and non-volatile memory and/or movement of the data in the non-volatile memory, based on execution of a specific instruction, the delay may occur by not executing another instruction after the specific instruction until the movement of the data is completed,. The operation of the processor 120 may be at least temporarily interrupted due to the delay. The delay is not limited by the above-described example.

Referring to FIG. 5, the processor 120 may identify first duration 510, which is the preset duration. The processor 120 may identify delayed second duration 520, based on being caused by the plurality of processes. The processor 120 may identify third duration 530, which is duration different from duration delayed by the plurality of processes. The processor 120 may obtain the parameter, based on a ratio of the second duration 520 to the first duration 510. For example, the parameter may be indicated through a value obtained by multiplying by 100 a value of the second duration 520 divided by the first duration 510. The processor 120 identifying the parameter obtained based on the ratio may adjust the area formed in the memory occupied by the plurality of processes.

According to an embodiment, the processor 120 may identify that the parameter exceeds a first parameter, which is a preset parameter. The processor 120 may adjust the area formed in the memory occupied by the plurality of processes, based on identifying the first parameter. The processor 120 may adjust a threshold to preset the area formed in the memory, based on identifying the first parameter. The processor 120 may adjust the number of identifiers that may be allocated to the process in a second state different from a first state executed by the processor 120. The processor 120 may adjust the threshold used to maintain the process in the second state. The threshold may be different according to the identifier allocated to the process in the second state.

According to an embodiment, the processor 120 may adjust the number of a partial area capable of allocating the plurality of processes to the area formed in the memory. For example, the processor 120 may allocate a first identifier to the process associated with a screen to control a display. The processor 120 may allocate the second identifier to the process executed independently from the screen to control the display. The processor 120 may release the process in the second state to which the first identifier is allocated prior to the process in the second state to which the second identifier is allocated, based on identifying the first parameter.

As described above, according to an embodiment, the electronic device 101 may identify a delay caused by a plurality of processors accessing the memory. The electronic device 101 may identify a parameter indicating the delay. The electronic device 101 may identify the parameter exceeding the first parameter, which is the preset parameter, based on identifying the parameter indicating the delay. The electronic device 101 may adjust the threshold used to maintain the process in the second state executed by the processor 120 in the memory, based on identifying the parameter exceeding the first parameter. The electronic device 101 may release the processes in the second state from the memory while adjusting the threshold. When releasing the processes in the second state from the memory, the electronic device 101 may release, by determining a ranking. The electronic device 101 may preferentially release the process in the second state to which the first identifier is allocated, compared to the process in the second state to which the second identifier is allocated. The electronic device 101 may increase calculation speed of the processor 120 by preferentially releasing the process in the second state to which the first identifier is assigned.

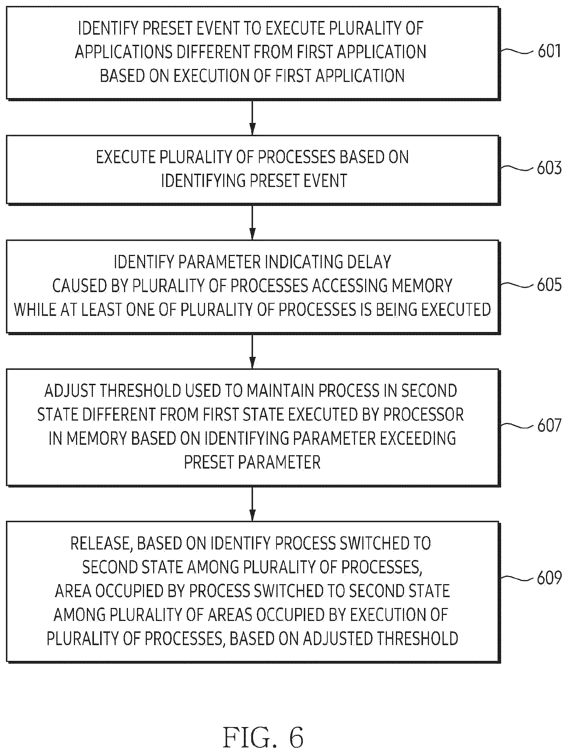

FIG. 6 illustrates an example of a flowchart of an operation of an electronic device according to an embodiment. The electronic device of FIG. 6 may be an example of the electronic device 101 of FIG. 1, FIG. 2, FIG. 3, FIG. 4, and/or FIG. 5. Operations of FIG. 6 may be an example of the processor 120 of FIG. 1, FIG. 2, and/or FIG. 5. The operations of FIG. 6 may be executed by the processor 120 of FIG. 1, FIG. 2, and/or FIG. 5. In the following embodiment, each operation may be performed sequentially, but is not necessarily performed sequentially. For example, an order of each operation may be changed, and at least two operations may be performed in parallel.

Referring to FIG. 6, in an operation 601, according to an embodiment, the electronic device may execute a first application. The electronic device may identify a preset event to execute a plurality of applications different from the first application, based on execution of the first application. The preset event may be referred to as a broadcast. The electronic device may execute the plurality of processes together with execution of the plurality of applications, based on identifying the preset event.

In an operation 603, according to an embodiment, the electronic device may identify the preset event (e.g., the broadcast). The electronic device may execute the plurality of processes based on identifying the preset event. At least a portion of the plurality of processes may be executed in a foreground mode. At least the portion of the plurality of processes may be executed in a background mode. For example, at least a portion of a process executed in the foreground mode and at least a portion of a process executed in the background mode may be referred to as the processes in a first state. For example, the at least a portion of the plurality of processes may occupy an area formed in memory (e.g., the memory 130 of FIG. 1 and/or FIG. 2) in a second state different from the first state. While accessing the memory, in the electronic device, a delay may be caused, based on the area occupied by the processes in the second state.

In an operation 605, according to an embodiment, the electronic device may identify that at least one of the plurality of processes is executed. The electronic device may identify the delay caused by the plurality of processes accessing the memory, while at least one of the plurality of processes is being executed. The electronic device may identify a parameter indicating the delay caused by the plurality of processes accessing the memory. For example, the parameter indicating the delay may be referred to as PSI. The PSI may be associated with a ratio between preset duration and duration in which at least a portion of a core of a processor (e.g., the processor 120 of FIG. 1 and/or FIG. 2) is temporarily interrupted. The electronic device may identify that the parameter exceeds a preset parameter.

In an operation 607, according to an embodiment, the electronic device may identify the parameter exceeding the preset parameter. The electronic device may adjust a threshold used to maintain the process in the second state, based on identifying the parameter exceeding the preset parameter. The electronic device may adjust the threshold used to maintain the process in the second state different from the first state executed by the processor in the memory, based on identifying the parameter exceeding the preset parameter.

For example, the electronic device may decrease the threshold used to maintain the process in the second state to which a first identifier is allocated. For example, the electronic device may increase the threshold used to maintain the process in the second state to which a second identifier is allocated. The electronic device may release the process in the second state to which the first identifier is allocated and the process in the second state to which the second identifier is allocated from the memory, based on adjusting the threshold. When releasing the process in the second state, the electronic device may preferentially release the process in the second state to which the first identifier is allocated, compared to the process in the second state to which the second identifier is allocated. The electronic device may access faster, when accessing the memory, by preferentially releasing the process in the second state to which the first identifier is allocated, compared to the process in the second state to which the second identifier is allocated.

In an operation 609, according to an embodiment, the electronic device may release an area occupied by the plurality of processes. The electronic device may identify a process switched to the second state among the plurality of processes. The electronic device may release, based on identifying the process switched to the second state among the plurality of processes, the area occupied by the process switched to the second state. The electronic device may release, based on identifying the process switched to the second state among the plurality of processes, the area occupied by the process switched to the second state among the plurality of areas occupied by the plurality of processes, based on the adjusted threshold.

As described above, according to an embodiment, the electronic device may, while at least one of the plurality of processes is executed, identify the parameter indicating the delay caused by the plurality of processes accessing the memory. The electronic device may adjust, based on identifying the parameter exceeding the preset parameter, the threshold used to maintain the process in the second state. The electronic device may release, based on identifying the process switched to the second state among the plurality of processes, the area occupied by the process switched to the second state among the plurality of areas formed in the memory, based on the adjusted threshold. The electronic device may release the process in the second state to which the first identifier is allocated among the processes in the second state. The electronic device may increase calculation speed of the processor by releasing the process in the second state to which the first identifier is allocated.

As described above, according to an embodiment, the electronic device may identify the preset event, based on the execution of the application. The electronic device may execute the plurality of processes associated with the preset event, based on identifying the preset event. The electronic device may switch to the second state different from the first state in which the plurality of processes is executed by the processor. The electronic device may identify that the plurality of processes in the second state occupy the area formed in the memory. The electronic device may require release of at least a portion of the plurality of processes in the second state to access the memory, while the plurality of processes in the second state occupy the area.

As described above, according to an embodiment, an electronic device 101 may comprise memory 130 storing instructions, and a processor 120. The instructions, when executed by the processor, may cause the electronic device to identify, based on execution of a first application 310, a preset event to execute a plurality of applications different from the first application 310. The instructions, when executed by the processor, may cause the electronic device to execute, based on identifying the preset event, a plurality of processes. The instructions, when executed by the processor, may cause the electronic device to, while at least one of the plurality of processes is executed, identify a parameter indicating a delay caused by the plurality of processes accessing the memory 130. The instructions, when executed by the processor, may cause the electronic device to adjust, based on identifying the parameter exceeding a preset parameter, a threshold used to maintain a process in a second state different from a first state executed by the processor 120 in the memory 130. The instructions, when executed by the processor, may cause the electronic device to release, based on identifying a process switched to the second state among the plurality of processes, an area occupied by the process switched to the second state among a plurality of areas 410, 420, 430, and 440 occupied by execution of the plurality of processes, based on the adjusted threshold.

The electronic device may release by presetting a ranking to perform at least a portion of release among the plurality of processes. The electronic device may efficiently access, when accessing the memory by presetting the ranking and releasing the plurality of processes in the second state.

According to an embodiment, the electronic device 101 may comprise a display 210. The process in the second state may be a process executed independently from a screen to control the display 210 before switched to the second state.

According to an embodiment, the electronic device 101 may comprise the display 210. The process in the second state may be a process associated with a screen to control the display 210 before switched to the second state.

According to an embodiment, the instructions, when executed by the processor, may cause the electronic device to increase the threshold used to maintain the process in the second state.

According to an embodiment, the instructions, when executed by the processor, may cause the electronic device to decrease the threshold used to maintain the process in the second state.

According to an embodiment, the instructions, when executed by the processor, may cause the electronic device to execute, based on at least one of a foreground mode, or a background mode, the process in the first state.

According to an embodiment, the instructions, when executed by the processor, may cause the electronic device to change, based on identifying a second preset parameter different from the preset parameter which is a first preset parameter, the adjusted threshold which is a first threshold, to a second threshold before adjustment.

According to an embodiment, the electronic device 101 may include the display 210. The instructions, when executed by the processor, may cause the electronic device to identify, before switched to the second state, a first process which was executed independently from a screen to control the display 120, and a second process associated with the screen to control the display 120. The instructions, when executed by the processor, may cause the electronic device to release an area occupied by the second process.

According to an embodiment, the instructions, when executed by the processor, may cause the electronic device to identify a number that the process in the second state was executed. The instructions, when executed by the processor, may cause the electronic device to obtain, based on identifying the number exceeding a preset number, a list including the process in the second state which was executed greater than the preset number.

As described above, according to an embodiment, a method of an electronic device 101 may comprise identifying, based on execution of a first application 310, a preset event to execute a plurality of applications different from the first application 310. The method of the electronic device may comprise executing, based on identifying the preset event, a plurality of processes. The method of the electronic device 101 may comprise, while at least one of the plurality of processes is executed, identifying a parameter indicating a delay caused by the plurality of processes accessing the memory 130. The method of the electronic device 101 may comprise adjusting, based on identifying the parameter exceeding a preset parameter, a threshold used to maintain a process in a second state different from a first state executed by a processor 120 in the memory 130. The method of the electronic device 101 may comprise releasing, based on identifying a process switched to the second state among the plurality of processes, an area occupied by the process switched to the second state among a plurality of areas 410, 420, 430, and 440 occupied by execution of the plurality of processes, based on the adjusted threshold.

According to an embodiment, the adjusting the threshold used to maintain the process in the second state may comprise adjusting, before switched to the second state, the threshold used to maintain the process in the second state, which is a process executed independently from a screen to control the display 210.

According to an embodiment, the adjusting the threshold used to maintain the process in the second state may comprise adjusting, before switched to the second state, the threshold used to maintain the process in the second state, which is a process associated with a screen to control the display 210.

According to an embodiment, the method of the electronic device 101 may comprise increasing the threshold used to maintain the process in the second state.

According to an embodiment, the method of the electronic device 101 may comprise decreasing the threshold used to maintain the process in the second state.

According to an embodiment, the method of the electronic device 101 may comprise executing the process in the first state based on at least one of a foreground mode, or a background mode.

According to an embodiment, the method of the electronic device 101 may comprise changing, based on identifying a second parameter different from the preset parameter which is a first preset parameter, the adjusted threshold which is a first threshold, to a second threshold before adjustment.

According to an embodiment, the method of the electronic device 101 may comprise identifying a first process executed independently from a screen to control the display 210 before switched to the second state, and a second process associated with the screen to control the display 210. The method of the electronic device 101 may comprise releasing an area occupied by the second process.

According to an embodiment, the method of the electronic device 101 may comprise identifying a number that the process in the second state was executed. The method of the electronic device 101 may comprise obtaining, based on identifying the number exceeding a preset number, a list including the process in the second state which was executed greater than the preset number.

As described above, in a computer readable storage medium storing one or more programs, according to an embodiment, the one or more programs, when executed by a processor 120 of an electronic device 101, may cause the processor 120 of the electronic device 101 to identify, based on execution of a first application 310, a preset event to execute a plurality of applications different from the first application 310. The one or more programs, when executed by the processor 120 of the electronic device 101, may cause the processor 120 of the electronic device 101 to execute, based on identifying the preset event, a plurality of processes. The one or more programs, when executed by the processor 120 of the electronic device 101, may cause the processor 120 of the electronic device 101 to, while at least one of the plurality of processes is executed, identify a parameter indicating a delay caused by the plurality of processes accessing the memory 130. The one or more programs, when executed by the processor 120 of the electronic device 101, may cause the processor 120 of the electronic device 101 to adjust, based on identifying the parameter exceeding a preset parameter, a threshold used to maintain a process in a second state different from a first state executed by the processor 120 in the memory 130. The one or more programs, when executed by the processor 120 of the electronic device 101, may cause the processor 120 of the electronic device 101 to release, based on identifying a process switched to the second state among the plurality of processes, an area occupied by the process switched to the second state among a plurality of areas 410, 420, 430, and 440 occupied by execution of the plurality of processes, based on the adjusted threshold.

According to an embodiment, the one or more programs, when executed by the processor 120 of the electronic device 101, may cause the processor 120 of the electronic device 101 to adjust, before switched to the second state, the threshold used to maintain the process in the second state which is a process executed independently from a screen to control a display 210.

According to an embodiment, the one or more programs, when executed by the processor 120 of the electronic device 101, may cause the processor 120 of the electronic device 101 to adjust, before switched to the second state, the threshold used to maintain the process in the second state which is a process associated with a screen to control the display 210.

According to an embodiment, the one or more programs, when executed by the processor 120 of the electronic device 101, may cause the processor 120 of the electronic device 101 to increase the threshold used to maintain the process in the second state.

According to an embodiment, the one or more programs, when executed by the processor 120 of the electronic device 101, may cause the processor 120 of the electronic device 101 to decrease the threshold used to maintain the process in the second state

According to an embodiment, the one or more programs, when executed by the processor 120 of the electronic device 101, may cause the processor 120 of the electronic device 101 to execute the process in the first state based on at least one of a foreground mode, or a background mode.

According to an embodiment, the one or more programs, when executed by the processor 120 of the electronic device 101, may cause the processor 120 of the electronic device 101 to change, based on identifying a second preset parameter different from the preset parameter which is a first preset parameter, the adjusted threshold which is a first threshold, to a second threshold before adjustment.

According to an embodiment, the one or more programs, when executed by the processor 120 of the electronic device 101, may cause the processor 120 of the electronic device 101 to identify a first process executed independently from a screen to control the display 210 before switched to the second state, and a second process associated with the screen to control the display 210. The one or more programs, when executed by the processor 120 of the electronic device 101, may cause the processor 120 of the electronic device 101 to release an area occupied by the second process.

According to an embodiment, the one or more programs, when executed by the processor 120 of the electronic device 101, may cause the processor 120 of the electronic device 101 to identify a number that the process in the second state was executed. The one or more programs, when executed by the processor 120 of the electronic device 101, may cause the processor 120 of the electronic device 101 to obtain, based on identifying the number exceeding a preset number, a list including the process in the second state which was executed greater than the preset number.

The electronic device according to various embodiments may be one of various types of electronic devices. The electronic devices may include, for example, a portable communication device (e.g., a smartphone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising,
memory storing instructions; and
a processor,
wherein the instructions, when executed by the processor, cause the electronic device to:
identify, based on execution of a first application, a preset event to execute a plurality of applications different from the first application;
execute, based on identifying the preset event, a plurality of processes;
while at least one of the plurality of processes is executed, identify a parameter indicating a delay caused by the plurality of processes accessing the memory;
adjust, based on identifying the parameter exceeding a preset parameter, a threshold used to maintain a process in a second state different from a first state executed by the processor in the memory; and
release, based on identifying a process switched to the second state among the plurality of processes, an area occupied by the process switched to the second state among a plurality of areas occupied by execution of the plurality of processes, based on the adjusted threshold.

2. The electronic device of claim 1, further comprising a display,
wherein the process in the second state is a process executed independently from a screen to control the display before switched to the second state.

3. The electronic device of any one of claim 1 to claim 2, further comprising a display,
wherein the process in the second state is a process associated with a screen to control the display before switched to the second state.

4. The electronic device of any one of claim 1 to claim 3, wherein the instructions, when executed by the processor, cause the electronic device to:
increase the threshold used to maintain the process in the second state.

5. The electronic device of any one of claim 1 to claim 4, wherein the instructions, when executed by the processor, cause the electronic device to:
decrease the threshold used to maintain the process in the second state.

6. The electronic device of any one of claim 1 to claim 5, wherein the instructions, when executed by the processor, cause the electronic device to:
execute, based on at least one of a foreground mode, or a background mode, the process in the first state.

7. The electronic device of any one of claim 1 to claim 6, wherein the instructions, when executed by the processor, cause the electronic device to:
change, based on identifying a second preset parameter different from the preset parameter, which is a first preset parameter, the adjusted threshold, which is a first threshold, to a second threshold before adjustment.

8. The electronic device of any one of claim 1 to claim 7, further comprising a display,
wherein the instructions, when executed by the processor, cause the electronic device to:
identify, before switched to the second state, a first process which was executed independently from a screen to control the display, and a second process associated with the screen to control the display; and
release an area occupied by the second process.

9. The electronic device of any one of claim 1 to claim 8, wherein the instructions, when executed by the processor, cause the electronic device to:
identify a number that the process in the second state was executed; and
obtain, based on identifying the number exceeding a preset number, a list including the process in the second state which was executed greater than the preset number.

10. A method of an electronic device, comprising:
identifying, based on execution of a first application, a preset event to execute a plurality of applications different from the first application;
executing, based on identifying the preset event, a plurality of processes;
while at least one of the plurality of processes is executed, identifying a parameter indicating a delay caused by the plurality of processes accessing the memory;
adjusting, based on identifying the parameter exceeding a preset parameter, a threshold used to maintain a process in a second state different from a first state executed by a processor in the memory; and
releasing, based on identifying a process switched to the second state among the plurality of processes, an area occupied by the process switched to the second state among a plurality of areas occupied by execution of the plurality of processes, based on the adjusted threshold.

11. The method of claim 10, wherein the adjusting the threshold used to maintain the process in the second state further comprises,
adjusting, before switched to the second state, the threshold used to maintain the process in the second state, which is a process executed independently from a screen to control a display.

12. The method of any one of claim 10 to claim 11, wherein the adjusting the threshold used to maintain the process in the second state further comprises,
adjusting, before switched to the second state, the threshold used to maintain the process in the second state which is a process associated with a screen to control a display.

13. The method of the electronic device of any one of claim 10 to claim 12, comprises,
increasing the threshold used to maintain the process in the second state.

14. The method of the electronic device of any one of claim 10 to claim 13, comprises,
decreasing the threshold used to maintain the process in the second state.

15. The method of the electronic device of any one of claim 10 to claim 14, comprises,
executing the process in the first state based on at least one of a foreground mode, or a background mode.
